# EUROPÄISCHE PATENTSCHRIFT

(11) **EP 1 302 831 B1**
(45) Veröffentlichungstag und Bekanntmachung des Hinweises auf die Patenterteilung: **23.09.2009**
(21) Anmeldenummer: 02022959.7
(22) Anmeldetag: 13.10.2002
(51) Int. Cl.: G05D 22/02, F24F 11/00

(54) **Verfahren und System zur Erkennung der Gefahr von Schimmelpilzbildung**
Method and system for detecting the risk of mildew formation
Méthode et système pour détecter le risque d'une formation de moisissure

(30) Priorität: 15.10.2001 DE 10150350
(43) Veröffentlichungstag der Anmeldung: 16.04.2003
(73) Patentinhaber: Techem Energy Services GmbH, 65760 Eschborn (DE); CiS Institut für Mikrosensorik GmbH, 99099 Erfurt (DE)
(72) Erfinder: Simon, Winfried, 64579 Gernsheim (DE); Richter, Wolfgang, Prof. Dr., 01109 Dresden (DE); Steinke, Arndt, 99192 Ingersleben (DE); Ohl, Jochen, Dr., 64823 Gross-Umstadt (DE); Hartmann, Thomas, Dr., 01705 Freital (DE); Völlmeke, Stefan, 99089 Erfurt (DE)
(74) Vertreter: KEIL & SCHAAFHAUSEN Patentanwälte

(56) Entgegenhaltungen:
- EP-A- 0 149 965
- EP-A- 0 232 432
- DE-A- 2 745 776
- DE-A- 4 112 198

## Beschreibung

Die vorliegende Erfindung betrifft ein Verfahren und ein System zur Erkennung der Gefahr von Schimmelpilzbildung auf Oberflächen in einem Raum, insbesondere in Wohnungen, durch Ermittlung der Feuchte in schimmelpilzkritischen Bereichen des Raumes.

Untersuchungen zu Schimmelpilzbildung lassen vermuten, dass in etwa 10% oder mehr der Wohnungen ein Schimmelpilzbefall festzustellen ist. Der Schimmelpilzbefall gefährdet die Gesundheit der Bewohner, schadet der Substanz des Gebäudes und sieht darüber hinaus hässlich aus. Hinzu kommt, dass auch durch bestimmte Sanierungsmaßnahmen die Gefahr von Schimmelpilzbildung weiter zunimmt. Bspw. werden thermisch relativ schlecht isolierte Gebäude teilweise mit sehr dichten Fenstern ausgestattet, die eine zuvor durch Undichtigkeiten der Fenster verursachte Spaltlüftung verhindern. Um Schimmelpilzbildung zu vermeiden, müsste in solchen Wohnungen oder Gebäuden nach der Sanierung häufiger gelüftet werden, was den bisherigen Gewohnheiten widerspricht. Zudem gibt es keinen Indikator für mangelndes, ausreichendes oder übertriebenes Lüftungsverhalten. Wird zu häufig gelüftet, führt dies zu einem unnötigen Energieverlust. Bei einem zu seltenen Lüften beginnt dagegen die Schimmelpilzbildung, die häufig auch Konflikte zwischen Vermieter und Mieter einer Wohnung hervorruft, da als mögliche Ursachen sowohl eine mangelhafte Substanz des Gebäudes als auch ein falsches Lüftungsverhalten in Frage kommen.

In Neubauten werden u. a. aus den beschriebenen Gründen vermehrt mechanische Lüftungsanlagen eingesetzt, die meist in Abhängigkeit von der Zeit gesteuert werden. Eine an den tatsächlichen Bedarf angepasste Lüftung wird dadurch jedoch nicht erreicht und so in der Regel entweder sehr viel Energie verschwendet oder eine Schimmelpilzbildung nicht wirksam verhindert.

Es sind auch Systeme bekannt, die das Raumklima überwachen, um aus den gewonnenen Klimadaten Rückschlüsse auf die Gefahr von Schimmelpilzbildung zu ziehen. In der DE 296 10 709 U1 wird bspw. eine Vorrichtung beschrieben, mit der der Raumluftzustand mit Hilfe eines Mischgassensors und eines Feuchtesensors detektiert wird. Damit liegen jederzeit Informationen über den Raumluftzustand vor, so dass die Lüftung über Fenster oder Lüftungseinrichtung nach diesen Werten geregelt werden kann.

Ferner ist aus der DE 41 12 198 C2 ein Verfahren zur Warnung vor zu hoher relativer Feuchte bekannt, bei dem aus der Raumlufttemperatur und der Wandoberflächentemperatur der Feuchtegehalt an der Oberfläche bestimmt und daraus ein Schaltwert ermittelt wird, bei dessen Überschreitung Maßnahmen zur Reduzierung der Luftfeuchte eingeleitet werden. Bei der Ermittlung des Schaltwertes wird ein von der Oberflächentemperatur abhängiges Regelkriterium berücksichtigt, mit dem sichergestellt werden soll, dass als Mittelwert über einen längeren Zeitraum Bedingungen an der kritischsten Stelle einer Raumoberfläche vorliegen, welche ein Wachstum oder eine Vermehrung von Schimmelpilzen gerade sicher verhindern.

Aus der DE 199 32 549 A1 ist ein Verfahren zur Bestimmung der relativen Feuchte in beliebigen Punkten einer thermodynamischen Grenzschicht an der Oberfläche eines Messobjekts bekannt, bei dem zwei Sensoren zur Bestimmung der relativen Feuchte in unterschiedlichem Abstand vor der Oberfläche des Messobjektes positioniert sind. Durch den Feuchtegradienten der relativen Feuchte dieser beiden Sensoren ist es möglich, die relative Feuchte in einem beliebigen Abstand vor der Oberfläche zu errechnen, so dass die relative Feuchte auch sehr dicht vor der Oberfläche bestimmt werden kann.

Die zuvor beschriebenen Verfahren haben jedoch den Nachteil, dass nicht alle Bedingungen, unter denen es zu einer Schimmelpilzbildung kommen kann, berücksichtigt werden. Daher sind die vorgeschlagenen Verfahren ungenau und können die Gefahr von Schimmelpilzbildung nicht mit ausreichender Sicherheit vorhersagen.

Aufgabe der vorliegenden Erfindung ist es daher, eine Möglichkeit vorzuschlagen, mit der die Gefahr von Schimmelpilzbildung zuverlässig erkannt werden kann.

Diese Aufgabe wird bei einem Verfahren der eingangs genannten Art im Wesentlichen dadurch gelöst, dass die Oberflächenfeuchte an einer gefährdeten Stelle, d. h. einem schimmelpilzkritischen Bereich des Raumes, durch einen Sensor bestimmt und der zeitliche Verlauf der Oberflächenfeuchte erfasst wird. In geschlossenen Räumen oder Wohnungen ist die Oberflächenfeuchte das ausschlaggebende Kriterium für die Bildung von Schimmelpilzen. Zur Bildung von Schimmelpilzen kommt es allerdings nur, wenn ein gewisser Wert für die Oberflächenfeuchte an der gefährdeten Stelle über einen längeren Zeitraum vorliegt. Eine nur kurzfristige Erhöhung der Oberflächenfeuchte bspw. während des Kochens oder beim Duschen führt nicht zur Gefahr der Bildung von Schimmelpilzen, wenn nach einer bestimmten Zeit der Wert für die Oberflächenfeuchte wieder unter einen kritischen Grenzwert absinkt. Durch die Erfassung des zeitlichen Verlaufs der Oberflächenfeuchte kann daher festgestellt werden, ob eine kritische Oberflächenfeuchte bspw. ununterbrochen über einen kritischen Zeitraum vorliegt, so dass es zu einer Schimmelpilzbildung kommen kann. Wenn die hohe Oberflächenfeuchte dagegen nur für kurze Zeit, bspw. wenige Stunden, anhält und danach wieder vergleichsweise trockene Zustände vorherrschen, kommt es nicht zur Auskeimung von Schimmelpilzsporen und sichtbarer Schimmelpilzbildung. Die weiteren Vorraussetzungen wie eine ausreichende Temperatur, das Vorhandensein von Luftsauerstoff, ein günstiger pH-Wert und ein ausreichendes Nährstoffangebot sind in den meisten Wohnungen erfüllt. Durch die Erfassung des zeitlichen Verlaufs der Oberflächenfeuchte an einer kritischen Stelle im Raum, die insbesondere durch einen Feuchtesensor bestimmt wird, kann die Gefahr einer Schimmelpilzbildung daher im Vergleich zu den im Stand der Technik bekannten Möglichkeiten wesentlich genauer vorhergesagt werden, weil die realistischen Lebensbedingungen der Schimmelpilze berücksichtigt werden. Dabei kann der Sensor bspw. die relative Feuchte in Oberflächennähe messen. Die tatsächliche Oberflächenfeuchte lässt sich dann aufgrund theoretischer Annahmen oder nach einer entsprechenden Kalibrierung der Sensoren bestimmen.

Um nicht aus Messungen der relativen Raumfeuchte auf die auf einer Oberfläche tatsächlich herrschende Feuchte zurückschließen zu müssen, ist gemäß einer besonders vorteilhaften Ausgestaltung des Verfahrens vorgesehen, dass die Oberflächenfeuchte von dem Sensor gemessen wird. Durch die direkte Messung der Oberflächenfeuchte bspw. mittels eines Oberflächen- oder Kapillarkondensationssensors wird das für die Schimmelpilzbildung ausschlaggebende Kriterium unmittelbar als Messgröße erfasst. Damit wird ausgeschlossen, dass eine nicht konstante Raumluftfeuchte innerhalb des Wohnraumes, die von der räumlichen Anordnung von Feuchtequellen und Feuchtesenken herrührt und von der Lüftungseffektivität und lokalen Zirkulationssystemen abhängt, die Messung beeinträchtigt. Ferner sind keine theoretische Annahmen darüber notwendig, wie sich die relative Luftfeuchte auf der Oberfläche der gefährdeten Stelle niederschlägt. Daher kann dieses Verfahren eine Gefahr von Schimmelpilzbildung besonders genau vorhersagen und anzeigen, wann eine Raumlüftung tatsächlich notwendig ist.

Eine besonders bevorzugte Erweiterung des Verfahrens sieht vor, dass eine Gefahr von Schimmelpilzbildung dann erkannt wird, wenn ein festlegbarer Wert für die Oberflächenfeuchte innerhalb eines festlegbaren Zeitintervalls insgesamt länger als eine vorgebbare Dauer überschritten wird. Durch ein solches Kriterium wird berücksichtigt, dass sich Schimmelpilze auch dann bilden, wenn eine kritische Oberflächenfeuchte zwar nicht ununterbrochen, aber in einem vergleichsweise kurzen Zeitraum von bspw. fünf Tagen länger als bspw. in der Summe 60 Stunden überschritten ist. Zusätzlich kann auch noch der Zeitraum berücksichtigt werden, für den die kritische Oberflächenfeuchte jeweils ununterbrochen überschritten war. Somit kann als weiteres Kriterium für das Erkennen der Gefahr von Schimmelpilzbildung berücksichtigt werden, ob mindestens ein oder jeder Zeitraum mit einer ununterbrochenen Überschreitung des kritischen Grenzwerts länger ist als eine zweite vorgebbare Dauer. In diesem Fall wird eine Schimmelpilzbildung bspw. dann festgestellt, wenn innerhalb der letzten fünf aufeinanderfolgenden Tage der kritische Wert für die Oberflächenfeuchte täglich mehr als 12 Stunden überschritten wird.

Zusätzlich oder alternativ kann erfindungsgemäß die durch den Sensor bestimmte oder gemessene Oberflächenfeuchte integriert und eine Gefahr von Schimmelpilzbildung dann erkannt werden, wenn die in einem festlegbaren Zeitintervall integrierte Oberflächenfeuchte einen vorgebbaren Wert überschreitet. Durch die Integration der Oberflächenfeuchte über einen bestimmten Zeitraum kann berücksichtigt werden, dass die Wahrscheinlichkeit für eine Schimmelpilzbildung von dem jeweiligen Grad der Oberflächenfeuchte abhängt. Durch eine solche Auswertung der Messsignale wird berücksichtigt, dass für bestimmte Pilzarten bei einer höheren Oberflächenfeuchte schon nach einer kürzeren Zeit die Gefahr der Bildung von Schimmelpilzsporen besteht als bei einer niedrigeren Oberflächenfeuchte. Dabei gibt der aktuelle Wert für die integrierte Oberflächenfeuchte vorzugsweise jeweils die in einem festlegbaren Zeitintervall vor der letzten Messung integrierte Oberflächenfeuchte an, so dass immer die aktuellsten Messwerte berücksichtigt werden können.

Die Bildung der Oberflächenfeuchte hängt auch stark von der Oberflächenbeschaffenheit der gefährdeten Fläche ab. Je nach Art der Oberfläche kann die Kondensation von Wasserdampf bereits bei einer relativen Luftfeuchte von 60 bis 70% einsetzen. Andererseits erfolgt die Kondensation auf glatten und eventuell hydrophoben Oberflächen erst bei 80 bis 90%. Damit einher geht auch eine unterschiedliche Gefahr der Schimmelpilzbildung. Daher wird erfindungsgemäß vorgeschlagen, bei der Bestimmung der Oberflächenfeuchte die Beschaffenheit der Oberfläche an der gefährdenden Stelle zu berücksichtigen.

Gemäß einer bevorzugten Ausführung der vorliegenden Erfindung kann dies durch Nachbildung der Beschaffenheit der Oberfläche an der gefährdeten Stelle auf dem Sensor geschehen. Dazu kann bspw. die Anzahl von Kondensationskeimen für typische Oberflächen wie Tapete, Putz oder dgl. bestimmt werden, um dann eine entsprechende Anzahl von Kondensationskeimen bspw. durch entsprechende Spitzen, Erhöhungen, Verunreinigungen oder dgl. auf der Sensorfläche des Oberflächenfeuchtesensors nachzubilden. Alternativ kann auch die tatsächliche Oberflächenstruktur und -beschaffenheit durch Verwendung geeigneter Materialien auf dem Sensor modelliert werden. Bei den erfindungsgemäß vorgeschlagenen Varianten wird die Oberfläche der Kondensationssensoren bezüglich der Kondensationskeime derart modifiziert, dass bei unterschiedlichen relativen Luftfeuchten unabhängig von der Temperatur ausschließlich der Kondensationsvorgang so detektiert wird, wie er auf der gefährdeten Oberfläche stattfindet.

Zusätzlich oder alternativ dazu kann die Beschaffenheit der Oberfläche an der gefährdeten Stelle durch Eichung des Sensors und/oder durch Parameter insbesondere bei der Messwertanalyse berücksichtigt werden. An sehr glatten Oberflächen bildet sich der Schimmelpilz später als auf rauen und porösen Flächen. Dieser Einfluss kann bspw. gut durch Parameter berücksichtigt werden. Mit der Berücksichtigung der Beschaffenheit der Oberfläche an einer gefährdeten Stelle wird erfindungsgemäß ein weiterer wichtiger Einflussfaktor auf die Schimmelpilzbildung beachtet und dadurch eine weitere Verbesserung des Verfahrens erreicht.

Zusätzlich kann erfindungsgemäß der Temperatureinfluss auf die Bildung von Schimmelpilzen berücksichtigt werden, indem bspw. die Raumlufttemperatur oder die an der gefährdeten Stelle herrschende Temperatur als weiteres Kriterium für die Beurteilung der Gefahr von Schimmelpilzbildung herangezogen wird.

Um auch den Raumluftzustand und die thermische Behaglichkeit mit zu erfassen, wird erfindungsgemäß vorgeschlagen, die Raumtemperatur, die Raumluftqualität und/oder eine Taupunktunterschreitung mit zu bestimmen. Dafür können beispielsweise Temperatur-, CO₂- und/oder Mischgassensoren eingesetzt werden.

Ferner betrifft die vorliegende Erfindung ein System zur Erkennung der Gefahr von Schimmelpilzbildung auf Oberflächen in einem Raum, insbesondere in Wohnungen, das eine Überwachungseinrichtung zur Durchführung des vorgeschriebenen Verfahrens aufweist, wobei die Überwachungseinrichtung einen Sensor zur Bestimmung der Oberflächenfeuchte an gefährdeten Stellen und einen Zeitgeber zur Zuordnung der Messzeit zu einem Wert der Oberflächefeuchte aufweist.

Um die Oberflächenfeuchte direkt zu messen ist erfindungsgemäß ein Kondensationssensor vorgesehen, insbesondere ein Oberflächenkondensationssensor oder ein Kapillarkondensationssensor. Ein Oberflächenkondensationssensor ist bspw. ein Taupunkt-Fühler mit monolithisch integrierten Mikrosensoren zur Feuchtedetektion. Derartige Mikrosensoren bestehen aus einem mikroelektronisch integriertem kapazitivem Condensate-Controlled-Capacitance-Sensor (CCC-Sensor), der ein Frequenzsignal proportional zum Grad der Betauung liefert. Durch eine Auswerteelektronik kann dann die Frequenzänderung in ein Schaltsignal umgewandelt werden. Bei den sogenannten Kapillarkondensationssensoren können sorptive Materialien entweder mit einem größeren Porengrößenbereich und z. B. linearer Kennlinie zwischen dem Sensorausgangssignal und der relativen Feuchte oder mit einem sehr engen Porengrößenbereich und stark abknickender, nicht linearer Kennlinie verwendet werden. Es hat sich herausgestellt, dass diese Kondensationssensoren nicht nur die Kondensation von Wassertropfen bei einer relativen Feuchte von 100 % relativer Luftfeuchte erfassen, sondern bereits ein der Oberflächenfeuchte proportionales Messsignal bei einer relativen Luftfeuchte ab etwa 70 % geben. In diesem Bereich besteht insbesondere aufgrund der beginnenden Kondensation die Gefahr von Schimmelpilzbildung. Daher sind derartige Sensoren zur Erfassung der Oberflächenfeuchte für die Ermittlung der Gefahr von Schimmelpilzbildung besonders geeignet.

Eine besonders realistische Bestimmung der Oberflächenfeuchte kann erfindungsgemäß dadurch erreicht werden, dass die Sensoren eine mit einer der Oberfläche der gefährdeten Stelle nachgebildete Sensorfläche aufweisen.

Das durch die Erfindung vorgeschlagene System zeigt die erkannte Gefahr einer Schimmelpilzbildung durch optische, akustische und/oder elektrische Signale an. Durch ein optisches und/oder akustisches Signal wird der Bewohner eines Raumes zur Fensterlüftung aufgefordert. Alternativ oder zusätzlich kann durch das elektrische Signal eine an das System angeschlossene Einrichtung geschaltet werden, durch die eine Verminderung der Oberflächenfeuchte erreicht wird.

Erfindungsgemäß kann es sich dabei um Lüftungs- und/oder Heizeinrichtungen handeln, welche durch das elektrische Signal des Systems bei erkannter Gefahr von Schimmelpilzbildung automatisch betätigt werden.

Zusätzlich ist es besonders vorteilhaft, wenn der zeitliche Verlauf der Oberflächenfeuchtigkeit in einem Datenspeicher speicherbar und von dort abrufbar ist, um die möglichen Ursachen der Schimmelpilzbildung ermitteln zu können. Damit können möglicherweise Streitigkeiten zwischen Vermieter und Mieter vermieden oder beigelegt werden, weil festgestellt werden kann, wann die Bedingungen für die Schimmelpilzbildung vorgelegen haben.

Nachfolgend werden das erfindungsgemäße Verfahren und System zur Erkennung und/oder Vermeidung von Schimmelpilzbildung anhand einer Ausführungsform und der Zeichnung näher beschrieben. Dabei ergeben sich weitere Merkmale und vorteilhafte Wirkungen der vorliegenden Erfindung, auch unabhängig von der Zusammenfassung der Merkmale in den Ansprüchen und deren Rückbezügen.

Es zeigen:
- Fig. 1: den zeitlichen Verlauf der Oberflächenfeuchte in einem ersten Raumzustand und
- Fig. 2: den zeitlichen Verlauf der Oberflächenfeuchte in einem zweiten Raumzustand.

Die bedeutendste Einflussgröße für Sporenkeimung, Myzelwachstum und Sporenbildung von Schimmelpilz ist die in Räumen vorherrschende Feuchtigkeit. Dabei sind die konkreten hygrischen Wachstumsbedingungen prinzipiell bekannt. So bevorzugen die sogenannten mesophilen Pilzspezies, die mit 85 % den größten Verbreitungsgrad besitzen, einen Bereich von 82 bis 88 % der relativen Luftfeuchte. Bei sogenannten trockenresistenten (xerophilen), für den Wohnbereich aber eher untypischen Schimmelpilzspezies ist auch bei geringerer relativer Luftfeuchte ein dann langsameres und reduziertes Wachstum möglich. Allerdings ist das Auftreten hoher Luftfeuchte allein kein gutes Maß für die Gefahr von Schimmelpilzbildung. Entscheidend für das Auftreten einer Gefahr von Schimmelpilzbildung ist der Wassergehalt auf der gefährdeten Oberfläche, wie bspw. Raufaser, Tapete, gestrichene Wand, Putz oder ähnliches.

Daher wird gemäß der vorliegenden Erfindung diese Oberflächenfeuchte durch einen entsprechenden Sensor an der Stelle im Raum erfasst, die für eine Schimmelpilzbildung besonders gefährdet ist. Solche gefährdeten Stellen sind gemeinhin bauphysikalisch vordefiniert (bspw. Raumecken oder Fensterlaibungen) oder durch die Einrichtung (bspw. die Anordnung der Möbel) beeinflusst. Daraus ergeben sich die Montageregeln für die Anordnung der Sensoren, damit eine zuverlässige Wirkweise des Verfahrens zur Erkennung der Gefahr von Schimmelpilzbildung sichergestellt ist. Dabei können auch mehrere Sensoren innerhalb des Raumes an verschiedenen gefährdeten Stellen oder Sensorarrays eingesetzt werden. Zudem können die gefährdeten Stellen z. B. bei niedrigen Außentemperaturen mit Hilfe einer Infrarotaufnahme oder anderen geeigneten Messmethoden festgestellt werden.

Bei den besonders geeigneten Kondensationssensoren handelt es sich um Oberflächenkondensationssensoren und Kapillarkondensationssensoren. Die Oberflächenkondensationssensoren erfassen insbesondere die Betauung bei einer relativen Luftfeuchte von 100 %, wie sie bspw. beim Duschen oder Kochen auftreten. Dabei ist die Oberfläche der Sensoren derart modifiziert, dass sie die Beschaffenheit der Oberfläche an der gefährdeten Stelle nachbilden. Dies geschieht durch Erzeugung von definierten Kondensationskeimen. Auf diese Weise ist es möglich, die in der Wand tatsächlich vorhandene Wassermenge durch den Sensor zu messen. Derartige Sensoren zeigen nach entsprechender Kalibrierung die Oberflächenfeuchte auch schon bei einer relativen Luftfeuchte im Bereich zwischen 70 und 100 % an.

Ferner kommen Kapillarkondensationssensoren zum Einsatz, bei denen sich bei einer relativen Luftfeuchte zwischen 70 und 100 % in den Poren des sorptiven Materials Kondenswasser bildet. Auch hier kann durch die Auswahl des sorptiven Materials die Oberflächenstruktur der gefährdeten Stelle nachgebildet werden.

Die Anpassung der Sensoren an die Oberfläche der gefährdeten Stelle wird endgültig durch eine Kalibrierung erreicht, bei der eine Korrelation zwischen dem Wassergehalt der Wand und dem in dem Sensor nachgewiesenen Wassergehalt festgestellt wird. Wenn die Eigenschaften der Wandmaterialien nicht bekannt sind, kann auch eine näherungsweise Vor-Ort-Kalibrierung durchgeführt werden, indem Sensor und Wand mittels einer speziellen Vorrichtung einer definierten Feuchte ausgesetzt und dabei die Feuchtigkeit der Wand bspw. mit einem Mikrowellen-Messgerät gemessen und dem Ausgangssignal des Sensors zugeordnet wird.

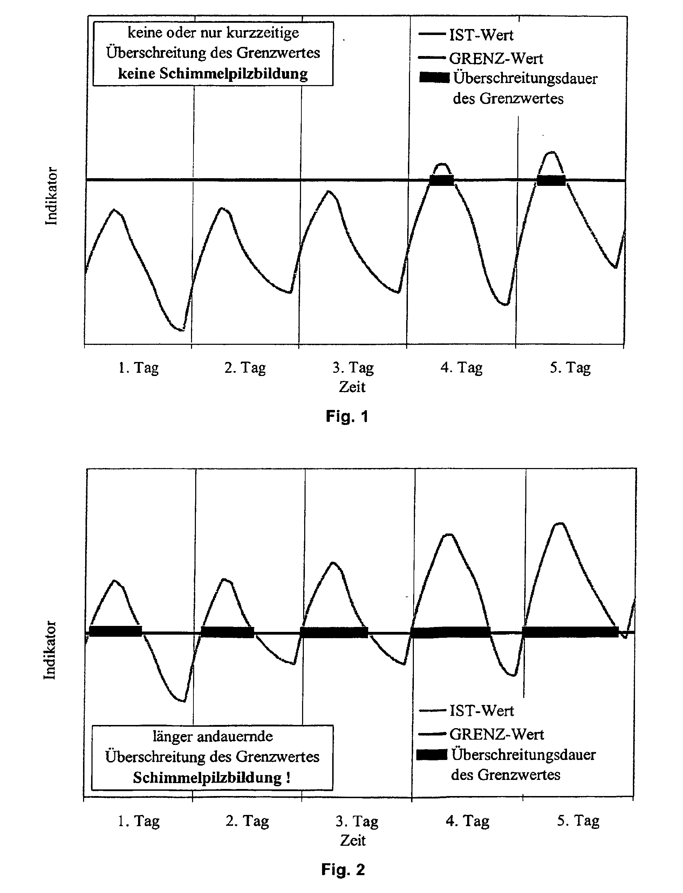

Ein typisches Ausgangssignal der Oberflächenfeuchte eines Kondensationssensors ist in den Fig. 1 und 2 als Indikatorsignal für verschiedene Raumzustände dargestellt. Danach zeigt die Oberflächenfeuchte in der Regel einen bestimmten Tagesgang, der sich mehr oder weniger regelmäßig wiederholt. Ferner ist ein als Grenzwert festgelegter Wert für eine kritische Oberflächenfeuchte eingezeichnet, bei dessen Überschreitung für eine längere Zeit die Gefahr von Schimmelpilzbildung droht.

In Fig. 1 wird ein Zeitintervall der letzten fünf Tage betrachtet. Darin wird der als kritischer Grenzwert festgelegte Wert für die Oberflächenfeuchte in den ersten drei Tagen nicht und an den Tagen 4 und 5 nur für kurze Zeit überschritten. Diese kurzfristige Überschreitung führt noch nicht zu einer Gefahr von Schimmelpilzbildung, so dass mit dem vorgeschlagenen Verfahren bei diesem Raumzustand die Gefahr von Schimmelpilzbildung nicht festgestellt wird.

Bei dem in Fig. 2 gezeigten ähnlichen Verlauf ist der kritische Grenzwert dagegen an jedem der fünf Tage für einen längeren Zeitraum überschritten. In dem dargestellten Fall ist der Wert für die Oberflächenfeuchte innerhalb der letzten fünf Tage insgesamt länger als eine vorgebbare Dauer überschritten, so dass hier die Gefahr von Schimmelpilzbildung besteht. Dabei wird die vorgebbare Dauer dann überschritten, wenn der zulässige kritische Grenzwert an mindestens fünf aufeinanderfolgenden Tagen täglich um mehr als 12 Stunden überschritten wird. Es können auch andere Kriterien ausschlaggebend sein, z. B. ein höherer Grenzwert für die Oberflächenfeuchte und dafür eine Überschreitung des Grenzwerts von nur täglich 6 Stunden innerhalb von fünf aufeinanderfolgenden Tagen. Dabei können auch mehrere dieser Kriterien gleichzeitig vorgegeben werden, um bspw. verschiedene Pilztypen mit möglicherweise verschiedenen Bedingungen für die Schimmelpilzbildungen gleichzeitig zu erfassen.

Das in den Fig. 1 und 2 gezeigte Signal wird über die Zeit elektronisch gespeichert, um im Nachhinein die Häufigkeit und Intensität der Gefahr von Schimmelpilzbildung feststellen und belegen zu können. Damit können bspw. auch bei Auseinandersetzungen zwischen Vermieter und Mieter einer Wohnung neutrale Argumente zur Klärung eines Sachverhaltes erbracht werden.

Um nach Erkennen der Gefahr einer Schimmelpilzbildung diese auch zu vermeiden, sollte eine angemessene Reaktion erfolgen. In der einfachsten Variante wird ein optisches, akustisches oder anderes Signal erzeugt, das zur Lüftung oder Erhöhung der Raumtemperatur durch Heizung auffordert. Alternativ kann auch ein Lüftungssystem, bspw. eine mechanische Lüftungsanlage oder ein elektrisch zu öffnendes Fenster, angesteuert werden. Die erzeugte Information kann auch in einem Bus- oder anderen hausinternen Kommunikationssystem integriert bzw. weiterverarbeitet werden.

Zusätzlich können in dem System ein oder mehrere Sensoren vorgesehen werden, um weitere Aspekte wie Raumluftqualität und thermisch Behaglichkeit zu erfassen. Hierzu lassen sich Temperatur-, CO₂- und/oder Mischgassensoren einsetzen.

Im Ergebnis erhält man eine bedarfsgeführte Lüftungsvorrichtung, welche energetisch sparsam ist, sicher für eine hochqualitative Raumluft sorgt und eine Schimmelpilzbildung zuverlässig vermeidet. Insbesondere wenn die Kondensation direkt auf dem Kondensationssensor gemessen wird und direkte Beziehungen zu den gefährdeten Oberflächen herstellbar sind, entspricht die Kinetik der Kondensation auf der gefährdeten Oberfläche weitestgehend der Kinetik der Kondensation auf dem Kondensationssensor. Somit kann direkt die schimmelpilzrelevante Kondensation gemessen und beurteilt werden.

## Patentansprüche

1. Verfahren zur Erkennung der Gefahr von Schimmelpilzbildung auf Oberflächen in einem Raum, insbesondere in Wohnungen, durch Ermittlung der Feuchte in dem Raum, **dadurch gekennzeichnet, dass** die Oberflächenfeuchte an einer gefährdeten Stelle durch einen Sensor bestimmt und der zeitliche Verlauf der Oberflächenfeuchte erfasst wird.

2. Verfahren nach Anspruch 1, **dadurch gekennzeichnet, dass** die Oberflächenfeuchte von dem Sensor gemessen wird.

3. Verfahren nach Anspruch 1 oder 2, **dadurch gekennzeichnet, dass** eine Gefahr von Schimmelpilzbildung dann erkannt wird, wenn ein festlegbarer Wert für die Oberflächenfeuchte innerhalb eines festlegbaren Zeitintervalls insgesamt länger als eine vorgebbare Dauer überschritten wird.

4. Verfahren nach einem der vorhergehenden Ansprüche, **dadurch gekennzeichnet, dass** die Oberflächenfeuchte integriert wird und eine Gefahr von Schimmelpilzbildung dann erkannt wird, wenn die in einem festlegbaren Zeitintervall integrierte Oberflächenfeuchte einen vorgebaren Wert übersteigt.

5. Verfahren nach einem der vorhergehenden Ansprüche, **dadurch gekennzeichnet, dass** bei der Bestimmung der Oberflächenfeuchte die Beschaffenheit der Oberfläche an der gefährdeten Stelle berücksichtigt wird.

6. Verfahren nach Anspruch 5, **dadurch gekennzeichnet, dass** die Beschaffenheit der Oberfläche an der gefährdeten Stelle auf dem Sensor nachgebildet wird.

7. Verfahren nach Anspruch 5 oder 6, **dadurch gekennzeichnet, dass** die Beschaffenheit der Oberfläche an der gefährdeten Stelle durch Eichung des Sensors und/oder durch Parameter berücksichtigt wird.

8. Verfahren nach einem der vorhergehenden Ansprüche, **dadurch gekennzeichnet, dass** der Temperatureinfluss auf die Bildung von Schimmelpilzen berücksichtigt wird.

9. Verfahren nach einem der vorhergehenden Ansprüche, **dadurch gekennzeichnet, dass** die Raumtemperatur, die Raumluftqualität und/oder eine Taupunktunterschreitung bestimmt werden.

10. System zur Erkennung der Gefahr von Schimmelpilzbildung auf Oberflächen in einem Raum, insbesondere in Wohnungen, **gekennzeichnet durch** eine Überwachungseinrichtung zur Durchführung des Verfahrens nach einem der Ansprüche 1 bis 9, wobei die Überwachungseinrichtung einen Sensor zur Bestimmung der Oberflächenfeuchte an gefährdeten Stellen und einen Zeitgeber zur Zuordnung der Messzeit zu einem Wert der Oberflächenfeuchte aufweist.

11. System nach Anspruch 10, **dadurch gekennzeichnet, dass** der Sensor ein Kondensationssensor, insbesondere ein Oberflächenkondensationssensor oder ein Kapillarkondensationssensor, ist.

12. System nach Anspruch 11, **dadurch gekennzeichnet, dass** der Kondensationssensor eine der Oberfläche an der gefährdeten Stelle nachgebildete Sensorfläche aufweist.

13. System nach einem der Ansprüche 10 bis 12, **dadurch gekennzeichnet, dass** eine erkannte Gefahr von Schimmelpilzbildung durch optische, akustische und/oder elektrische Signale angezeigt wird.

14. System nach Anspruch 13, **gekennzeichnet durch** eine Lüftungsund/oder Heizeinrichtung, welche **durch** das elektrische Signal bei erkannter Gefahr von Schimmelpilzbildung betätigt wird.

15. System nach einem der Ansprüche 10 bis 14, **dadurch gekennzeichnet, dass** der zeitliche Verlauf der Oberflächenfeuchtigkeit speicherbar ist.

## Claims

1. A method for detecting the risk of mildew formation on surfaces in a room, in particular in apartments, by determining the humidity in the room, **characterized in that** the surface humidity in an at-risk location is determined by means of a sensor and the time course of the surface humidity is recorded.

2. A method according to claim 1, **characterized in that** the surface humidity is measured by the sensor.

3. A method according to claim 1 or claim 2,
**characterized in that** a risk of mildew formation is identified if a specifiable value for the surface humidity is exceeded longer in total than a predeterminable length of time within a specifiable time interval.

4. A method according to any of the preceding claims, **characterized in that** the surface humidity is integrated and a risk of mildew formation is identified if the surface humidity integrated in a specifiable time interval exceeds a predeterminable value.

5. A method according to any of the preceding claims, **characterized in that** the nature of the surface in the at-risk location is taken into account when determining the surface humidity.

6. A method according to claim 5, **characterized in that** the nature of the surface in the at-risk location is simulated on the sensor.

7. A method according to claim 5 or claim 6,
**characterized in that** the nature of the surface in the at-risk location is taken into account by calibrating the sensor and/or by means of parameters.

8. A method according to any of the preceding claims, **characterized in that** the temperature influence on the formation of mildew is taken into account.

9. A method according to any of the preceding claims, **characterized in that** the room temperature, room air quality and/or a drop below the dew point are determined.

10. A system for detecting the risk of mildew formation on surfaces in a room, in particular in apartments, **characterized by** a monitoring device for implementing the method according to any of claims 1 to 9, the monitoring device comprising a sensor for determining the surface humidity in at-risk locations and a timer to assign the measurement time to a value of the surface humidity.

11. A system according to claim 10, **characterized in that** the sensor is a condensation sensor, in particular a surface condensation sensor or a capillary condensation sensor.

12. A system according to claim 11, **characterized in that** the condensation sensor has a sensor surface, which simulates the surface in the at-risk location.

13. A system according to any of claims 10 to 12,
**characterized in that** a detected risk of mildew formation is indicated by optical, acoustic and/or electrical signals.

14. A system according to claim 13, **characterized by** a ventilation device and/or heating device, which is operated by the electrical signal when a risk of mildew formation is detected.

15. A system according to any of claims 10 to 14,
**characterized in that** the time course of the surface humidity can be stored.

## Revendications

1. Procédé pour détecter le risque de formation de moisissures sur des surfaces dans une pièce, notamment dans des appartements, par détermination de l'humidité dans la pièce, **caractérisé en ce que** l'humidité superficielle est définie par un capteur en un endroit exposé et **en ce que** la variation temporelle de l'humidité superficielle est relevée.

2. Procédé selon la revendication 1, **caractérisé en ce que** l'humidité superficielle est mesurée par le capteur.

3. Procédé selon la revendication 1 ou 2, **caractérisé en ce qu'**un risque de formation de moisissure est détecté lorsqu'une valeur déterminable pour l'humidité superficielle est globalement dépassée dans un intervalle de temps déterminable plus longtemps qu'une durée définissable.

4. Procédé selon l'une quelconque des revendications précédentes, **caractérisé en ce que** l'humidité superficielle est intégrée et **en ce qu'**un risque de formation de moisissure est détecté lorsque l'humidité superficielle intégrée dans un intervalle de temps déterminable outrepasse une valeur prédéfinissable.

5. Procédé selon l'une quelconque des revendications précédentes, **caractérisé en ce que** lors de la détermination de l'humidité superficielle, la qualité intrinsèque de la surface est considérée sur l'endroit exposé.

6. Procédé selon la revendication 5, **caractérisé en ce que** la qualité intrinsèque de la surface sur l'endroit exposé est reproduite sur le capteur.

7. Procédé selon la revendication 5 ou 6, **caractérisé en ce que** la qualité intrinsèque de la surface sur l'endroit exposé est prise en considération par étalonnage du capteur et/ou par des paramètres.

8. Procédé selon l'une quelconque des revendications précédentes, **caractérisé en ce que** l'influence de la température sur la formation de moisissure est prise en considération.

9. Procédé selon l'une quelconque des revendications précédentes, **caractérisé en ce que** la température ambiante, la qualité de l'air ambiant et/ou la non-atteinte d'un point de rosée sont définies.

10. Système pour détecter le risque de formation de moisissures sur des surfaces dans une pièce, notamment dans des appartements, **caractérisé par** un dispositif de surveillance pour la réalisation du procédé selon l'une quelconque des revendications 1 à 9, le dispositif de surveillance comportant un capteur pour la définition de l'humidité superficielle en des endroits exposés et un générateur de rythme pour l'affectation du temps de mesure à une valeur de l'humidité superficielle.

11. Système selon la revendication 10, **caractérisé en ce que** le capteur est un capteur de condensation, notamment un capteur de condensation superficielle ou un capteur de condensation capillaire.

12. Système selon la revendication 11, **caractérisé en ce que** le capteur de condensation comporte une surface de capteur reproduisant la surface à l'endroit exposé.

13. Système selon l'une quelconque des revendications 10 à 12, **caractérisé en ce qu'**un risque détecté de formation de moisissures est affiché par des signaux optiques, acoustiques et/ou électriques.

14. Système selon la revendication 13, **caractérisé par** un dispositif de ventilation et/ou de chauffage, qui est actionné par un signal électrique lors d'un risque détecté de formation de moisissures.

15. Système selon l'une quelconque des revendications 10 à 14, **caractérisé en ce que** la variation temporelle de l'humidité superficielle est susceptible d'être mémorisée.
